# EUROPEAN PATENT APPLICATION

(11) **EP 4 340 107 A1**
(43) Date of publication of application: **20.03.2024**
(21) Application number: 22855453.1
(22) Date of filing: 10.08.2022
(51) Int. Cl.: H01M 50/209, H01M 50/244, H01M 50/258, H01M 50/262

(54) **BATTERY MODULE, BATTERY PACK, AND VEHICLE**

(30) Priority: 10.08.2021 CN 202121868740 U
(71) Applicant: Byd Company Limited, P.R. China, Guangdong 518118 (CN)
(72) Inventor: CHEN, Tao, Shenzhen, Guangdong Province, 518118, P.R. China Guangdong 518118 (CN); LIU, Guoxiong, Shenzhen, Guangdong Province, 518118, P.R. China Guangdong 518118 (CN); ZHANG, Xiaorui, Shenzhen, Guangdong Province, 518118, P.R. China Guangdong 518118 (CN); LIU, Jian, Shenzhen, Guangdong Province, 518118, P.R. China Guangdong 518118 (CN); WANG, Gaowu, Shenzhen, Guangdong Province, 518118, P.R. China Guangdong 518118 (CN)
(74) Representative: Arnold & Siedsma
(86) International application number: PCT/CN2022/111302
(87) International publication number: WO 2023/016472

(57) **Abstract**

A battery module, a battery pack, and a vehicle are provided. The battery module includes a battery body, an end plate, and a cover body. The battery body includes multiple battery cells. The multiple battery cells are arranged side by side. The end plate is arranged on an end portion of the battery body. According to the battery module, the end plate is arranged on the end portion of the battery body, the end plate is provided with a first exhaust channel therein, the cover body is engaged with multiple pressure relief valves to form a second exhaust channel, and the second exhaust channel is in communication with the first exhaust channel.

## Description

### CROSS-REFERENCE TO RELATED APPLICATIONS

The present disclosure claims priority to Chinese Patent Application No. 202121868740.9, filed on August 10, 2021 and entitled "BATTERY MODULE AND BATTERY PACK". The entire content of the above-referenced application is incorporated herein by reference.

### FIELD

The present disclosure relates to a battery module, a battery pack, and a vehicle.

### BACKGROUND

In the related art, in response to continuous development of new energy vehicles and battery pack structures, a design integration of battery packs is increasingly high. Through high-degree battery pack integration, an internal space of a battery pack may be fully utilized, and an energy density of the entire battery pack is improved.

However, when the integration of the battery pack is excessively high, a distance between a battery cell and a wire harness component therein is relatively close. When a short circuit occurs in a battery cell, high-temperature gas emitted by the battery cell causes a failure of an insulation effect of high-voltage and low-voltage wire harnesses, resulting in a risk of short circuit in the battery pack. Moreover, the high-temperature gas emitted by the battery cell has a specific degree of combustibility, which may cause the battery pack to explode, seriously affecting use safety of the battery pack and the electric vehicle.

### SUMMARY

A purpose of the present disclosure is to provide new technical solutions including a battery module, a battery pack, and a vehicle.

According to a first aspect of the present disclosure, a battery module is provided, which includes:
a battery body, including multiple battery cells, the multiple battery cells being arranged side by side, and a pressure relief valve being arranged on a top of each of the battery cells;
an end plate, the end plate being arranged on an end portion of the battery body, and the end plate being provided with a first exhaust channel therein; and
a cover body, the cover body being arranged in an arrangement direction of the multiple battery cells and being engaged with the multiple pressure relief valves to form a second exhaust channel, and the second exhaust channel being in communication with the first exhaust channel.

Optionally, the first exhaust channel includes an inner cavity and an air inlet and an air outlet in communication with the inner cavity.

Two ends of the cover body each are connected with one air inlet.

Optionally, the battery module further includes a wire harness. The wire harness is arranged outside the second exhaust channel and is electrically connected with the battery cell.

Optionally, the air inlet is arranged staggered with respect to the air outlet.

Optionally, a snap is arranged in a position of the end plate close to the air inlet. The two ends of the cover body are connected with the air inlet through the snap.

Optionally, a first sealing layer is arranged between the two ends of the cover body and the end plate.

A second sealing gasket is arranged between the cover body and the battery body.

Optionally, the battery module further includes a side plate. The side plate is arranged on a side surface of the battery body in the arrangement direction of the multiple battery cells.

Optionally, the multiple pressure relief valves are arranged linearly.

Optionally, an insulation layer is sandwiched between adjacent battery cells.

According to a second aspect of the present disclosure, a battery pack is provided, which includes at least one battery module described in the first aspect.

Optionally, the battery pack further includes a tray. The battery module is fixed to the tray.

The tray is provided with a third exhaust channel therein. The second exhaust channel is in communication with the third exhaust channel through the first exhaust channel.

According to a third aspect of the present disclosure, a vehicle is provided. The vehicle includes the battery pack described in the second aspect.

A technical effect of the embodiments of the present disclosure is as follows:

An embodiment of the present disclosure provides a battery module. The battery module includes the battery body, the end plate, and the cover body. According to the battery module, the end plate is arranged on the end portion of the battery body, the end plate is provided with the first exhaust channel therein, and the cover body is engaged with the multiple pressure relief valves to form the second exhaust channel. After the second exhaust channel is in communication with the first exhaust channel, gas generated in the battery cell may be exhausted hermetically in a fixed direction, which effectively prevents a safety risk during runway of the battery module, and ensures safety performance of the battery module.

Through the following detailed description of exemplary embodiments of the present disclosure with reference to the drawings, other features and advantages of the present disclosure will become clear.

### BRIEF DESCRIPTION OF THE DRAWINGS

The drawings that are incorporated into and constitute a part of the specification illustrate embodiments of the present disclosure, and are used to explain the principle of the present disclosure together with the description.
FIG. 1 is a schematic structural diagram of a battery module according to an embodiment of the present disclosure.
FIG. 2 is a cross-sectional view of the battery module according to an embodiment of the present disclosure.
FIG. 3 is an exploded view of the battery module according to an embodiment of the present disclosure.
FIG. 4 is a schematic structural diagram of an end plate of the battery module according to an embodiment of the present disclosure.
FIG. 5 is a cross-sectional view of the end plate of the battery module according to an embodiment of the present disclosure.
FIG. 6 is a cross-sectional view of a plane A-A in FIG. 5.

In the drawings: 1-Battery cell; 11-Pressure relief valve; 2-Side plate; 3-End plate; 31-Air inlet; 32-Air outlet; 33-Inner cavity; 34-Snap; 4-Cover body; 5-First sealing layer; 6-Second sealing gasket; 7-Insulation layer.

### DETAILED DESCRIPTION

Various exemplary embodiments of the present disclosure are described in detail with reference to the drawings. It should be noted that, unless otherwise specified, the relative arrangement, the numerical expression, and values of the components and steps stated in the embodiments do not limit the scope of the present disclosure.

The following description of at least one exemplary embodiment is merely illustrative, and in no way constitutes any limitation on the present disclosure and application or use thereof.

Technologies, methods, and devices known to a person of ordinary skill in the related art may not be discussed in detail, but where appropriate, the technologies, the methods, and the devices should be considered as a part of the specification.

In all examples shown and discussed herein, any specific value should be construed as merely exemplary and not as limitations. Therefore, other examples of exemplary embodiments may have different values.

It should be noted that, similar reference numerals and letters indicate similar terms in the following drawings. Therefore, once an item is defined in a drawing, the item does not need to be further discussed in subsequent drawings.

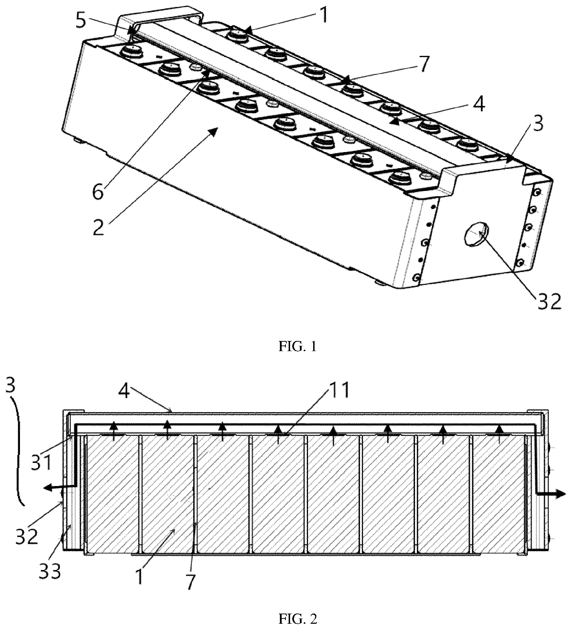

Referring to FIG. 1 to FIG. 3, an embodiment of the present disclosure provides a battery module. The battery module includes
a battery body, an end plate 3, and a cover body 4. The battery body includes multiple battery cells 1. The multiple battery cells 1 are arranged side by side. The multiple battery cells 1 may be arranged in parallel, or may be arranged in series, or may be arranged in a combination of serial and parallel manners. A pressure relief valve 11 is arranged on a top of each of the battery cells 1. When excessive air pressure exists in the battery cell 1, the pressure in the battery cell 1 may be relieved through the pressure relief valve 11, to ensure safe operation of the battery body.

The end plate 3 is arranged on an end portion of the battery body. For example, when the multiple battery cells 1 are arranged side by side and form a battery body with a rectangular appearance, the end plate 3 may be arranged at two ends of the battery body in a length direction. The end plate 3 is provided with a first exhaust channel therein. The cover body 4 is arranged in an arrangement direction of the multiple battery cells 1 and is engaged with the multiple pressure relief valves 11 to form a second exhaust channel. The second exhaust channel is in communication with the first exhaust channel.

Specifically, after the second exhaust channel is in communication with the first exhaust channel, an effective exhaust channel may be formed. When the battery cell 1 generates excessive gas or encounters a short circuit, air pressure inside the battery cell 1 significantly increases and high-temperature combustible gas is generated. Since the cover body 4 is engaged with the multiple pressure relief valves 11 to form the second exhaust channel, the high-pressure gas may be exhausted to the second exhaust channel through the pressure relief valve 11 and then exhausted to the outside through the first exhaust channel, which ensures use safety of the battery module.

According to the battery module provided in this embodiment of the present disclosure, the end plate 3 is arranged on the end portion of the battery body, the end plate 3 is provided with the first exhaust channel therein, and the cover body 4 is engaged with the multiple pressure relief valves 11 to form the second exhaust channel. After the second exhaust channel is in communication with the first exhaust channel, high-temperature combustible gas generated in the battery cell 1 may be exhausted hermetically in a fixed direction, which reduces convective mixing of the high-temperature combustible gas with air, prevents combustion and explosion caused by the high-temperature combustible gas, thereby effectively preventing a safety risk during runway of the battery module, and ensuring safety performance of the battery module.

In addition, the exhaust channel in the present disclosure formed by the cover body 4 and the end plate 3 features convenient and quick mounting, a simple and compact structure, material cost reduction, and a hermetic exhaust space, and reduces difficulty in forming the second exhaust channel. In this way, formation and production costs of components in the battery module can be significantly reduced, especially for some materials that cannot be easily formed (for example, mica).

Optionally, the first exhaust channel includes an inner cavity 33 and an air inlet 31 and an air outlet 32 in communication with the inner cavity 33. Two ends of the cover body 4 each are connected with one air inlet 31, to cause the second exhaust channel to be in communication with the inner cavity 33.

Specifically, the inner cavity 33 is an empty cavity inside the first exhaust channel. The first exhaust channel may further include a housing where the air inlet 31 and the air outlet 32 are provided. The air inlet 31 and the air outlet 32 are both in communication with the inner cavity 33. After the second exhaust channel is in communication with the inner cavity 33, an effective exhaust channel may be formed. When the battery cell 1 generates excessive gas or encounters a short circuit, air pressure inside the battery cell 1 significantly increases and high-temperature combustible gas is generated. Since the cover body 4 is engaged with the multiple pressure relief valves 11 to form the second exhaust channel, the high-pressure gas may be exhausted to the second exhaust channel through the pressure relief valve 11 and then exhausted to the outside through the inner cavity 33, which ensures use safety of the battery module.

In addition, in a case that the end plate 3 is provided with the inner cavity 33 inside, the inner cavity 33 may directly collect solid particles carried in the high-temperature combustible gas, so that the high-temperature solid substances accumulate at a bottom of the end plate 3, thereby reducing impact of the high-temperature solid substances on the battery cell.

Optionally, the battery module further includes a wire harness. The wire harness is arranged outside the second exhaust channel and is electrically connected with the battery cell 1.

Specifically, the battery cell 1 generally has a positive terminal and a negative terminal. The wire harness may include a high-voltage wire harness and a low-voltage wire harness. One end of the wire harness may be electrically connected with the positive terminal and the negative terminal of the battery cell 1, and the other end of the wire harness may be electrically connected with an external circuit, so as to implement charging and discharging operations of the battery cell 1. In a case that the wire harness is arranged outside the second exhaust channel, the wire harness is isolated from combustible gas that may be generated inside the second exhaust channel, which not only facilitates arrangement of the wire harness, but also avoids impact of the combustible gas in the second exhaust channel on the wire harness, thereby improving use safety of the wire harness.

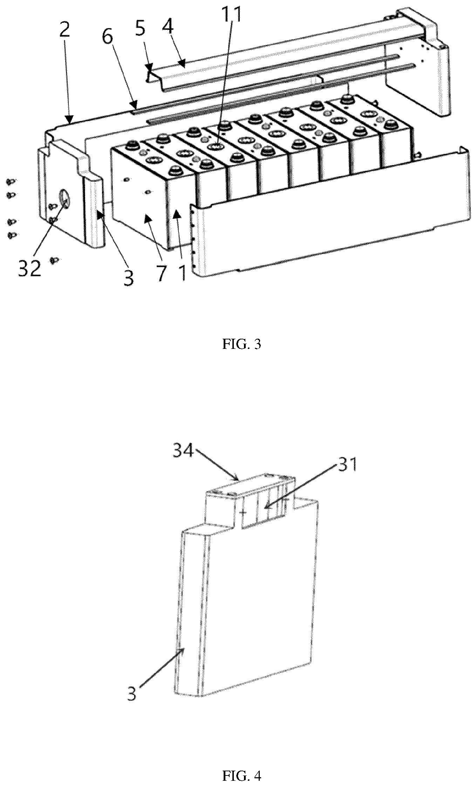

Optionally, referring to FIG. 4 to FIG. 6, the air inlet 31 is arranged staggered with respect to the air outlet 32.

Specifically, the gas in the second exhaust channel may be exhausted into the inner cavity 33 through the air inlet 31, and then exhausted out of the battery module through the air outlet 32. When the air inlet 31 is arranged staggered with respect to the air outlet 32, a turning structure of an exhaust path may be formed. When the gas in the second exhaust channel has an excessively high temperature or carries combustible particles, the turning structure formed by the air inlet 31 and the air outlet 32 may cause the high-temperature gas and the combustible particles to first collide with an inner wall of the inner cavity 33. In this way, impact on of the high-temperature gas and the combustible particles after being exhausted through the air outlet 32 on the use safety of the battery module is avoided. Moreover, when the gas in the second exhaust channel includes relatively heavy high-temperature particles, the high-temperature particles may directly fall onto the bottom of the end plate 3 after colliding with the inner wall of the inner cavity 33, thereby separating the high-temperature particles from the gas, and ensuring the safety of the battery module.

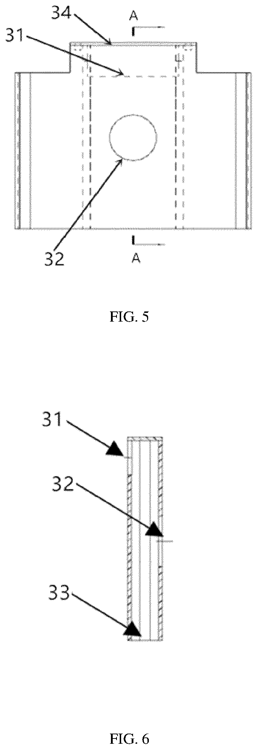

Optionally, referring to FIG.4 and FIG. 5, a snap 34 is arranged in a position of the end plate 3 close to the air inlet 31. The two ends of the cover body 4 are connected with the air inlet 31 through the snap 34.

Specifically, when the two ends of the cover body 4 each are connected with one air inlet 31, in order to ensure reliability of the connection between the cover body 4 and the end plate 3, an end portion of the cover body 4 may be fixed to the end plate 3 through the snap 34. For example, the end portion of the cover body 4 may be arranged to cover a top of the end plate 3, and then the snap 34 is pressed against the end portion of the cover body 4 and connected with the end plate 3, thereby pressing and fixing the cover body 4.

Optionally, referring to FIG. 1 and FIG. 3, a first sealing layer 5 is arranged between the two ends of the cover body 4 and the end plate 3.

Specifically, after the second exhaust channel is in communication with the inner cavity 33, an exhaust channel of the battery module is formed. When gas in the exhaust channel is conveyed from the second exhaust channel in the cover body 4 to the inner cavity 33 in the end plate 3, in order to prevent the exhausted gas from leaking through a gap between the cover body 4 and the end plate 3, the first sealing layer 5 may be arranged between the two ends of the cover body 4 and the end plate 3, which improves sealing of the exhaust channel, improves compactness of the structure between the two ends of the cover body 4 and the end plate 3, and ensures integrity of the exhaust channel. In addition, the first sealing layer 5 may be a high-temperature resistance material such as inorganic foam with back adhesive, and may be directly adhered between the cover body 4 and the end plate 3.

Optionally, referring to FIG. 1 and FIG. 3, a second sealing gasket 6 is arranged between the cover body 4 and the battery body.

Specifically, when the cover body 4 is engaged with the multiple pressure relief valves 11 to form the second exhaust channel, in order to prevent gas exhausted through the pressure relief valve 11 from leaking to the outside of the second exhaust channel, the second sealing gasket 6 may be arranged between the cover body 4 and the battery body. The second sealing gasket 6 can not only seal the second exhaust channel, but also offset an assembly gap between the second exhaust channel and the battery body, and absorb relative friction between structures caused by vibration during the operation of the battery module, so that the battery module has a safer and firmer structure, thereby implementing a desirable assembly effect. In addition, the second sealing gasket 6 may be a high-temperature resistance such as inorganic foam with back adhesive, to be directly adhered between the cover body 4 and the battery body.

Optionally, the battery module further includes a side plate 2. The side plate 2 is arranged on a side surface of the battery body in the arrangement direction of the multiple battery cells 1.

Specifically, the side plate 2 is arranged on the side surface of the battery body in the arrangement direction of the multiple battery cells 1. For example, when the multiple battery cells 1 are arranged in a rectangular shape, the side plate 2 may be arranged on two sides of the multiple battery cells 1 in a length direction. The side plate 2 may be a metal side plate. The side plate 2 may prevent the side surface of the battery cells 1 from being scratched, to provide effective protection for the side surface of the battery cells 1.

Optionally, referring to FIG. 2 and FIG. 3, the multiple pressure relief valves 11 are arranged linearly.

Specifically, when the pressure relief valves 11 on the tops of the battery cells 1 are in the same position, the multiple pressure relief valves 11 may be arranged linearly after the multiple battery cells 1 are arranged side by side. When the cover body 4 is engaged with the multiple pressure relief valves 11, a linear second exhaust channel may be formed, which improves exhaust smoothness of the second exhaust channel.

Optionally, referring to FIG. 1 to FIG. 3, an insulation layer 7 is sandwiched between adjacent battery cells 1.

Specifically, during the operation of the battery module, a large amount of heat is generated inside each battery cell 1. If the multiple battery cells 1 converge together, overheating may be caused in partial positions, resulting in a risk of damage to the battery cell 1. When the insulation layer 7 is arranged between adjacent battery cells 1, the battery cell 1 is are isolated from each other. In this way, not only an expansion force between the battery cells 1 may be absorbed, but also convergence of heat generated by the multiple battery cells 1 is avoided when the battery module generates a relatively large amount of heat, which provides a desirable insulation effect for the battery cell 1. In addition, the insulation layer 7 may flexibly adjust an assembly tolerance between the battery cells 1, which facilitates assembly during production. In addition, the heat insulation layer 7 may be an insulation material such as an air gel pad or inorganic foam.

Optionally, referring to FIG. 1 and FIG. 3, the end plate 3 may be connected with the side plate 2 by using screws or rivets, to limit and fix the multiple battery cells 1. Before the battery cell 1 is fixed, structural adhesive may be coated on a side of the side plate 2 close to the battery cell 1, to effectively fix the battery cell 1.

An embodiment of the present disclosure further provides a battery pack. The battery pack includes at least one battery module.

Specifically, according to the battery module of the battery pack provided in this embodiment of the present disclosure, the end plate 3 is arranged on the end portion of the battery body, the end plate 3 is provided with the inner cavity 33 therein, and the cover body 4 is engaged with the multiple pressure relief valves 11 to form the second exhaust channel. After the second exhaust channel is in communication with the inner cavity 33, high-temperature combustible gas generated in the battery cell 1 may be exhausted hermetically in a fixed direction, which reduces convective mixing of the high-temperature combustible gas with air, prevents combustion and explosion caused by the high-temperature combustible gas, thereby effectively preventing a safety risk during runway of the battery module, and ensuring safety performance of the battery pack.

Optionally, the battery pack further includes a tray. The battery module is fixed to the tray.

The tray is provided with a third exhaust channel therein. The second exhaust channel is in communication with the third exhaust channel through the first exhaust channel.

Specifically, the tray may be arranged to be in communication with an inlet and an outlet in communication with the third exhaust channel. After the second exhaust channel is in communication with the third exhaust channel through the inner cavity 33 of the first exhaust channel, the gas generated inside the battery module may be exhausted to the outside of the battery pack through the outlet on the tray, which effectively prevents impact of the high-temperature combustible gas generated inside the battery module on the components inside the battery pack, thereby ensuring the safety performance of the battery pack.

An embodiment of the present disclosure provides a vehicle. The vehicle includes the battery pack.

Despite the detailed illustration of some particular embodiments of the present disclosure by using the examples, a person skilled in the art should understand that the above examples are merely intended to describe rather than limit the scope of the present disclosure. A person skilled in the art should understand that modifications may be made to the above embodiments without departing from the scope and spirit of the present disclosure. The scope of the present disclosure is as defined by the appended claims.

## Claims

1. A battery module, comprising:
a battery body, comprising a plurality of battery cells (1), the plurality of battery cells (1) being arranged side by side, and a pressure relief valve (11) being arranged on a top of each of the battery cells (1);
an end plate (3), the end plate (3) being arranged on an end portion of the battery body, and the end plate (3) being provided with a first exhaust channel therein; and
a cover body (4), the cover body (4) being arranged in an arrangement direction of the plurality of battery cells (1) and being snap-fitted onto the plurality of pressure relief valves (11) to form a second exhaust channel, and the second exhaust channel being in communication with the first exhaust channel.

2. The battery module according to claim 1, wherein the first exhaust channel comprises an inner cavity (33) and an air inlet (31) and an air outlet (32) in communication with the inner cavity (33); and
two ends of the cover body (4) each are connected with one said air inlet (31).

3. The battery module according to claim 1 or 2, further comprising a wire harness, the wire harness being arranged outside the second exhaust channel and being electrically connected with the battery cell (1).

4. The battery module according to any of claims 1 to 3, wherein the air inlet (31) is arranged staggered with respect to the air outlet (32).

5. The battery module according to any of claims 1 to 4, wherein a snap (34) is arranged in a position of the end plate (3) close to the air inlet (31); and the two ends of the cover body (4) are connected with the air inlet (31) through the snap (34).

6. The battery module according to any of claims 1 to 5, wherein a first sealing layer (5) is arranged between the two ends of the cover body (4) and the end plate (3); and
a second sealing gasket (6) is arranged between the cover body (4) and the battery body.

7. The battery module according to any of claims 1 to 6, further comprising a side plate (2), the side plate (2) being arranged on a side surface of the battery body in the arrangement direction of the plurality of battery cells (1).

8. The battery module according to any of claims 1 to 7, wherein the plurality of pressure relief valves (11) are arranged linearly.

9. The battery module according to any of claims 1 to 8, wherein an insulation layer (7) is sandwiched between adjacent battery cells (1).

10. A battery pack, comprising the battery module according to any of claims 1 to 9.

11. The battery pack according to claim 10, further comprising a tray, the battery module being fixed to the tray; and
the tray being provided with a third exhaust channel therein, and the second exhaust channel being in communication with the third exhaust channel through the first exhaust channel.

12. A vehicle, comprising the battery pack according to claim 10 or 11.
